# FASCICULE DE BREVET EUROPEEN

(11) **EP 2 833 004 B1**
(45) Date de publication et mention de la délivrance du brevet: **24.08.2016**
(21) Numéro de dépôt: 13178751.7
(22) Date de dépôt: 31.07.2013
(51) Int. Cl.: F16B 5/06

(54) **Support d'agrafe**
Träger für Klammer
Clip support

(43) Date de publication de la demande: 04.02.2015
(73) Titulaire: EUROSTYLE SYSTEMS, 36000 Châteauroux (FR)
(72) Inventeur: Chausset, François, 36250 Saint-Maur (FR)
(74) Mandataire: Berger, Helmut

(56) Documents cités:
- EP-A1- 2 199 630
- WO-A1-2008/016178

## Description

L'invention concerne un support d'agrafe pour une agrafe comprenant un pied d'agrafe et une portion d'attache à une structure ainsi qu'un procédé d'insertion d'une agrafe comprenant un pied d'agrafe et une portion d'attache à une structure, dans un tel support d'agrafe.

Pour faciliter à la fois le montage et le démontage de panneaux d'habillage et d'autres éléments amovibles dans un véhicule automobile, ces éléments sont pourvus d'agrafes formées pour être engagées dans des orifices aménagés à cet effet dans la structure qui doit recevoir l'élément (voir par exmple le document WO 2008/ 016178 A1).

Cependant, dans la plupart des cas, le montage des agrafes sur l'élément à attacher à une structure s'effectue en force à travers une boutonnière dont le passage est rétréci localement pour éviter que les agrafes ne puissent sortir d'elles-mêmes de leur logement. La boutonnière peut faire partie d'un support rapporté à l'élément à attacher tout comme la boutonnière peut être intégrée dans l'élément. Dans les deux cas, la force nécessaire pour ce type de montage dépasse nettement les efforts admis pour un montage manuel ; ce travail est donc réalisé avec des outils automatiques.

Toutefois, dans certains cas, le montage des agrafes doit être effectué exclusivement manuellement.

Le but de l'invention est en conséquence de proposer un support d'agrafe formé de façon à ce que l'effort d'introduction de l'agrafe dans le support reste inférieur à 2 daN qui est le seuil de pénibilité acceptable pour ce type d'opération.

Le but de l'invention est atteint avec un support pour une agrafe comprenant un pied d'agrafe et une portion d'attache à une structure, le support comportant une paroi d'appui sur laquelle la portion d'attache de l'agrafe repose après insertion de l'agrafe dans le support et en dessous de laquelle paroi d'appui le pied d'agrafe vient se loger par l'insertion de l'agrafe dans le support, la paroi d'appui étant pourvue à cet effet d'une boutonnière ouverte à une de ses deux extrémités opposées et le support comprenant en outre une languette solidaire du support par une de ses deux extrémités opposées, l'autre extrémité étant libre et orientée vers l'extrémité ouverte de la boutonnière de façon à pouvoir empêcher l'agrafe de sortir d'elle-même de la boutonnière.

Selon le mode de réalisation choisi, l'invention concerne également au moins une des caractéristiques supplémentaires suivantes, considérées isolément ou en combinaison :
- le support d'agrafe comprend une zone de positionnement servant à positionner l'agrafe avant son introduction dans la boutonnière, la zone de positionnement étant bordée par deux nervures de centrage ;
- la languette est disposée dans la zone de positionnement pour l'agrafe ;
- la languette est située à un niveau inférieur par rapport au niveau de la paroi d'appui.

Le but de l'invention est également atteint avec un procédé d'insertion d'une agrafe comprenant un pied d'agrafe et une portion d'attache à une structure, dans un support d'agrafe comportant une paroi d'appui sur laquelle la portion d'attache de l'agrafe repose après insertion de l'agrafe dans le support d'agrafe et en dessous de laquelle paroi d'appui le pied d'agrafe vient se loger par l'insertion de l'agrafe dans le support, la paroi d'appui étant pourvue à cet effet d'une boutonnière ouverte à une de ses deux extrémités opposées et le support d'agrafe comportant en outre une languette flexible et solidaire du support par une de ses deux extrémités opposées, l'autre extrémité étant libre et orientée vers l'extrémité ouverte de la boutonnière de façon à pouvoir empêcher l'agrafe de sortir d'elle-même de la boutonnière, le procédé comprenant les étapes de présentation de l'agrafe devant l'extrémité ouverte de la boutonnière dans une position inclinée permettant d'introduire le pied d'agrafe entre la languette et l'extrémité ouverte de la boutonnière et insertion de l'agrafe dans le support d'agrafe avec appui concomitant de l'agrafe sur la languette pour la faire s'affaisser le temps que l'agrafe passe.

L'effort d'introduction de l'agrafe dans le support ne doit pas dépasser 2 daN.

D'autres caractéristiques, détails et avantages de la présente invention apparaîtront dans la description ci-après faite en référence aux dessins annexés qui sont donnés uniquement à titre d'exemple illustrant deux modes de réalisation de l'invention et dont :
- la figure 1: représente, en une vue en perspective, un support d'agrafe selon un premier mode de réalisation de l'invention et une agrafe mise en place dans le support d'agrafe,
- la figure 2: représente, en une vue en perspective différente, uniquement le support d'agrafe de la figure 1,
- la figure 3: représente l'ensemble support d'agrafe et agrafe de la figure 1 en une vue en coupe longitudinale,
- la figure 4: représente, en une vue mixte en perspective et en coupe longitudinale, l'agrafe en cours d'insertion dans le support d'agrafe de la figure 1,
- la figure 5: représente, en la même vue mixte que le figure 3, l'agrafe à la fin de son insertion dans le support d'agrafe,
- la figure 6: représente, en une vue en perspective, une variante du premier mode de réalisation de l'invention,
- la figure 7: représente la variante de réalisation de la figure 6 en coupe longitudinale, et
- la figure 8: représente, en une vue en perspective, un support d'agrafe selon un second mode de réalisation de l'invention et une agrafe mise en place dans le support d'agrafe.

Le support d'agrafe de la présente invention est adapté à des agrafes 20 ayant un pied d'agrafe 21 et une portion d'attache 22 qui est destinée à être engagée dans un orifice aménagé à cet effet dans la structure, par exemple une porte d'un véhicule automobile, qui doit recevoir un élément 30 ou 31 sur lequel est montée l'agrafe 20, par exemple un panneau d'habillage de la face intérieure de cette porte.

Selon un premier mode de réalisation de l'invention, le support d'agrafe est formé par injection et de matière avec l'élément sur lequel l'agrafe doit être montée, l'élément étant référencé en 30. Le dispositif d'injection doit être pourvu d'un mécanisme de démoulage, comme cela est indiqué plus loin. Selon une variante de réalisation, le support d'agrafe est une pièce formée séparément par injection et rapportée à l'élément sur lequel l'agrafe doit être montée, l'élément étant alors référencé en 31. Et selon un second mode de réalisation, le support d'agrafe est formé par injection et de matière avec l'élément sur lequel l'agrafe doit être montée, mais il est formé de façon à pouvoir être obtenu par un démoulage naturel, l'élément étant référencé en 30. La différence entre les deux modes de réalisation et la variante de réalisation portant sur des détails et non pas sur la structure proprement dite du support d'agrafe de l'invention, ce dernier est décrit ci-après en référence au premier mode de réalisation, la description de la variante de réalisation et du second mode de réalisation se limitant à la description des différences par rapport au premier mode de réalisation. Des indications d'orientation (par exemple : arrière, latérale, gauche, supérieure, amont) dans la présente description se réfèrent à la direction d'insertion de l'agrafe dans le support d'agrafe et à la position du support d'agrafe dans les dessins.

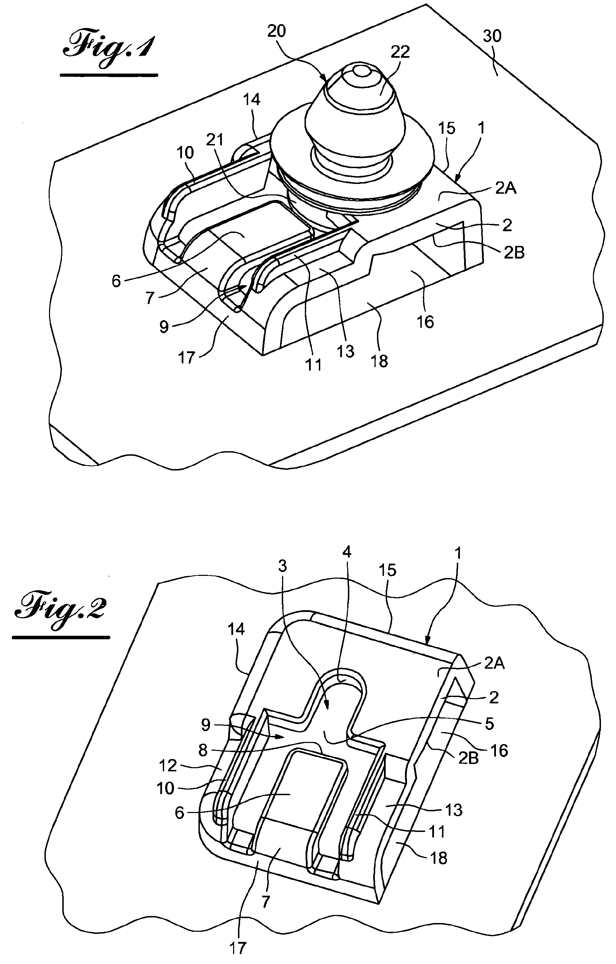

Un support d'agrafe 1 selon l'invention, représenté sur les figures 1 à 3, comprend une paroi d'appui 2 avec une face supérieure 2A sur laquelle la portion d'attache 22 de l'agrafe 20 repose après insertion de l'agrafe dans le support, et une face inférieure 2B en dessous de laquelle le pied d'agrafe 21 vient se loger par l'insertion de l'agrafe 20 dans le support 1. La paroi d'appui 2 est pourvue à cet effet d'une boutonnière 3 ayant une extrémité fermée 4 et une extrémité opposée ouverte 5.

La paroi d'appui 2 est rehaussée par rapport à l'élément 30 et reliée à celui-ci par des étagements 12, 13, une paroi latérale gauche 14 et une paroi arrière 15. Du côté droit, le support d'agrafe 1 est dépourvu de paroi latérale et présente ainsi une ouverture 16 qui sert au moment du démoulage de l'élément 30 sur lequel le, ou généralement plusieurs supports d'agrafe 1 sont formés, au passage d'un mécanisme de démoulage.

Le support 1 comprend en outre une languette 6 avec une extrémité 7 par laquelle elle est solidaire du support 1 et une extrémité opposée libre 8 orientée vers l'extrémité ouverte 5 de la boutonnière 3 de façon à pouvoir empêcher l'agrafe 1 de sortir d'elle-même de la boutonnière 3. Ainsi, la fonction de la zone de rétrécissement d'une boutonnière traditionnelle est remplie, selon la présente invention, par l'agencement de la languette 6 située en amont de la boutonnière.

Afin de faciliter l'introduction de l'agrafe 20 dans le support 1, ce dernier comprend une zone de positionnement 9 formée devant l'extrémité ouverte 5 de la boutonnière 3. La zone de positionnement 9 est délimitée latéralement par deux parois de centrage 10, 11 s'étendant perpendiculairement vers le bas par rapport à un premier plan P1 dans lequel s'étend la face supérieure 2A de la paroi d'appui 2. Les parois de centrage 10, 11 s'étendent jusqu'à un deuxième plan P2 qui est parallèle au, et transversalement espacé du, premier plan P1 et dans lequel s'étend transversalement, par rapport au sens d'introduction de l'agrafe 20, un rebord 17 du support 1.

Le rebord 17 est la partie du support d'agrafe 1 à laquelle la languette 6 est solidaire au support 1 et à partir de laquelle la languette 6 s'étend d'abord en direction du premier plan P1, de préférence perpendiculairement au plan P2, et ensuite le long d'un troisième plan P3 situé entre le premier plan P1 et le deuxième plan P2 et parallèle à, et transversalement espacé de, chacun desdits autres plans. Le plan P3 est celui dans lequel s'étend la partie horizontale de la face supérieure de la languette 6 et qui correspond à un plan dans lequel s'étend la surface inférieure 2B de la paroi d'appui 2. « Correspondre » signifie ici que les deux plans peuvent être identiques tout comme il peut y avoir un léger espacement entre ces deux plans qui dépend de l'épaisseur du pied d'agrafe 21. De même, l'espacement entre le plan P2 et le plan P3 est déterminé en fonction des dimensions (épaisseur et largeur ou diamètre) du pied d'agrafe 21.

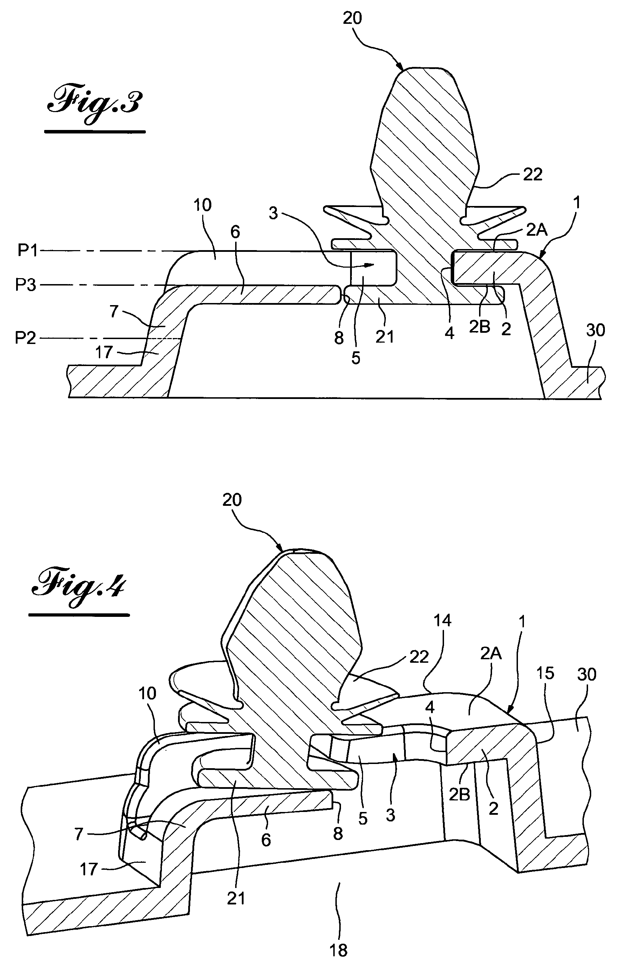

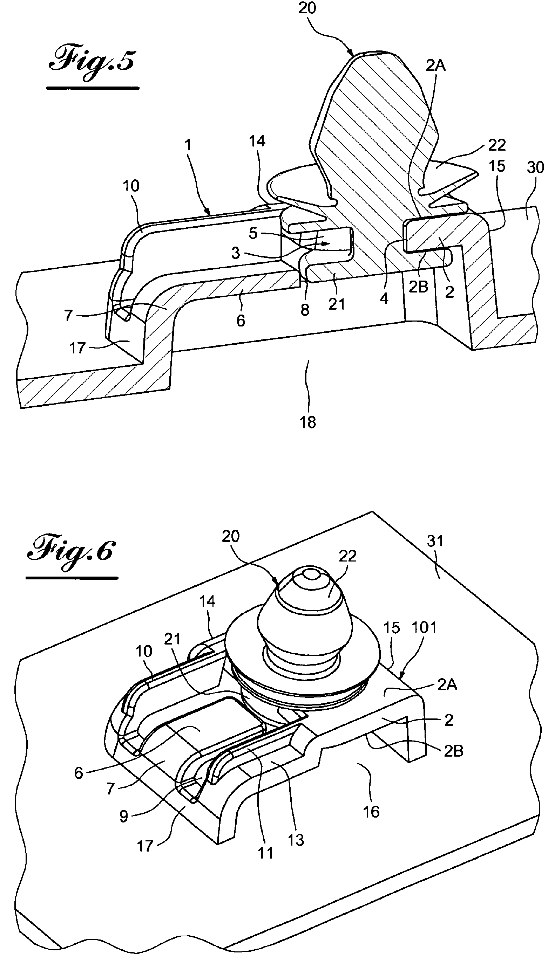

Les figures 4 et 5 représentent, en coupe et légèrement en perspective, respectivement l'insertion d'une agrafe 20 dans le support 1 et l'agrafe 20 en place dans le support 1. On voit ainsi sur la figure 4 que l'agrafe 20 doit être présentée dans la zone de positionnement 9 en position inclinée afin que le pied d'agrafe 21 puisse être engagé entre le bord de la paroi d'appui 2 et le bord de l'extrémité libre 8 de la languette 6. Lorsque le pied d'agrafe 21 est engagé, l'opérateur appuie sur l'agrafe 20 afin d'exercer un effort sur la languette 6 et obtenir ainsi qu'elle s'affaisse pour laisser passer l'agrafe 20. Lorsque l'agrafe 20 est en place dans la boutonnière 3 du support 1, la languette 6 reprend sa place et rend impossible que l'agrafe sorte d'elle-même de la boutonnière et que l'agrafe 20 soit démontée par inadvertance. En effet, pour démonter l'agrafe 20, c'est-à-dire pour sortir l'agrafe de la boutonnière 3, il faut au préalable appuyer sur la languette 6 afin qu'elle fléchisse vers le plan P2 et laisse ainsi sortir l'agrafe 20.

Les figures 4 et 5 confirment par ailleurs ce qui est moins bien visible sur la figure 1, à savoir le support d'agrafe 1 n'a pas de fond. Ainsi, le support d'agrafe 1 s'élève au-dessus d'une ouverture 18 formée dans l'élément 30.

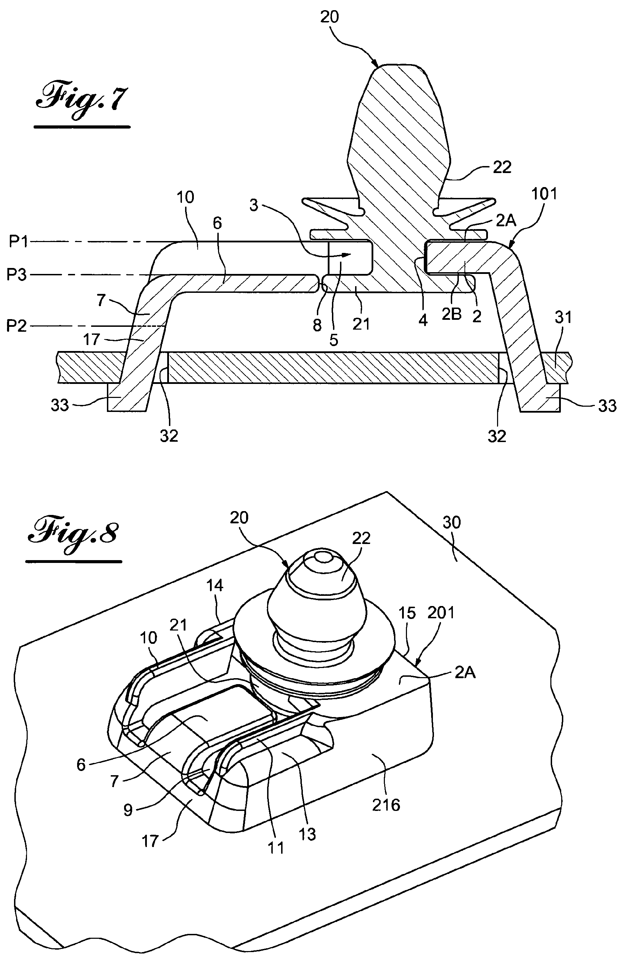

Les figures 6 et 7 représentent une variante du premier mode de réalisation de l'invention et une agrafe 20 mise en place dans le support d'agrafe qui porte ici la référence 101. Le support d'agrafe 101 est une pièce réalisée séparément d'un élément 31 sur lequel l'agrafe 20 doit être fixée, mais avec la même structure que le support d'agrafe 1. Le support d'agrafe 101 est fixé sur l'élément 31 par exemple par clipsage. A cet effet, l'élément 31 est pourvu, à chaque emplacement prévu pour un support d'agrafe 101, de perforations 32, le plus souvent en quantité trois ou quatre, et le support d'agrafe 101 est pourvu d'une même quantité de griffes 33 destinées à être engagées dans les perforations correspondantes 32 de l'élément 31.

Selon une solution alternative de cette variante de réalisation du premier mode de réalisation de l'invention, le support d'agrafe peut être rapporté à l'élément sur lequel l'agrafe doit être montée, par soudage ou collage.

La figure 8 représente un second mode de réalisation de l'invention et une agrafe 20 mise en place dans le support d'agrafe qui porte ici la référence 201. Le support d'agrafe 201 présente la même structure fonctionnelle que le support d'agrafe 1. Cependant, le support d'agrafe 201 diffère du support d'agrafe 1 par la réalisation du quatrième des quatre côtés qui portent la paroi d'appui 2, sous la forme d'une paroi latérale droite fermée 216. Ainsi, le support d'agrafe 201, formé de matière avec l'élément qui doit en être équipé, ressemble, en raison des parois latérales et arrière inclinées, à un tronc de pyramide. Il peut être démoulé sans assistance de démoulage, notamment sans mécanisme de démoulage, avec l'élément 30 qui en est équipé.

## Revendications

1. Agencement de montage et de démontage d'éléments amovibles sur une structure porteuse comportant une agrafe (20) et un support (1) pour ladite agrafe (20), ladite agrafe (20) comprenant un pied d'agrafe (21) et une portion d'attache (22) à ladite structure,
le support (1) comportant
une paroi d'appui (2) avec
une face supérieure (2A) sur laquelle la portion d'attache (22) de l'agrafe (20) repose après insertion de l'agrafe dans le support et
une face inférieure (2B) en dessous de laquelle paroi d'appui (2) le pied d'agrafe (21) vient se loger par l'insertion de l'agrafe (20) dans le support (1),
la paroi d'appui (2) étant pourvue à cet effet d'une boutonnière (3) ouverte à l'extrémité d'introduction (5) de l'agrafe (20) et fermée à l'extrémité opposée (4),
et une languette (6)
disposée devant l'extrémité ouverte (5) de la boutonnière (3) et solidaire du support (1) par une (7) de ses deux extrémités opposées (7, 8),
la languette (6) s'étendant sensiblement parallèlement à la paroi d'appui (2) du support (1) et étant élastiquement déformable entre une position dans laquelle elle est déformée pour permettre l'insertion de l'agrafe (20) dans la boutonnière (3) et une position de repos dans laquelle elle empêche l'agrafe (20) de sortir d'elle-même de la boutonnière (3) après son insertion,
**caractérisé en ce qu'**un plan (P3) dans lequel s'étend une partie horizontale de la face supérieure de la languette (6) correspond à un plan dans lequel s'étend la face inférieure de la paroi d'appui (2) et **en ce que** l'agencement est adapté pour une insertion de l'agrafe (20) dans la boutonnière (3) en position inclinée par rapport à la surface supérieure de la languette (6) de façon que la zone de contact du pied d'agrafe (21) avec la languette (6) soit située à l'extrémité libre (8) de celle-ci (6) juste devant l'ouverture de la boutonnière (3).

2. Agencement selon la revendication 1, **caractérisé en ce que** le pied d'agrafe (21) a une forme circulaire.

3. Agencement selon la revendication 1 ou 2, **caractérisé en ce qu'**il comprend une zone de positionnement (9) servant à positionner l'agrafe (20) avant son insertion dans la boutonnière (3).

4. Agencement selon la revendication 3, **caractérisé en ce que** la zone de positionnement (9) est bordée par deux parois de centrage (10, 11).

5. Procédé d'insertion d'une agrafe (20) comprenant un pied d'agrafe (21) et une portion d'attache (22) à une structure porteuse, dans un support d'agrafe (1) comportant une paroi d'appui (2) avec une face supérieure (2A) sur laquelle la portion d'attache (22) de l'agrafe (20) repose après insertion de l'agrafe dans le support et une face inférieure (2B) en dessous de laquelle paroi d'appui (22) le pied d'agrafe (21) vient se loger par l'insertion de l'agrafe (20) dans le support (1), la paroi d'appui (21) étant pourvue à cet effet d'une boutonnière (3) ouverte à une extrémité d'introduction (5) de l'agrafe (20) de ses deux et fermée à l'extrémités opposées (4, 5), le support (1) comprenant en outre une languette (6) disposée devant l'extrémité ouverte (5) de la boutonnière (3) et solidaire du support (1) par une (7) de ses deux extrémités opposées (7, 8), la languette (6) s'étendant sensiblement parallèlement à la paroi d'appui (2) du support (1) et étant élastiquement déformable entre une position dans laquelle elle est déformée pour permettre l'insertion de l'agrafe (20) dans la boutonnière (3) et une position de repos dans laquelle elle empêche l'agrafe (20) de sortir d'elle-même de la boutonnière (3) après son insertion,
**caractérisé en ce qu'**il comprend les étapes de
présentation de l'agrafe (20) devant l'extrémité ouverte (5) de la boutonnière (3) dans une position inclinée par rapport à la surface supérieure de la languette (6) permettant d'introduire le pied d'agrafe (21) entre la languette (6) et l'extrémité ouverte (5) de la boutonnière (3) de façon que la zone de contact du pied d'agrafe (21) avec la languette (6) soit située à l'extrémité libre (8) de celle-ci (6) et
insertion de l'agrafe (20) dans le support d'agrafe (1) avec appui concomitant de l'agrafe (20) sur la languette (6) pour la faire s'affaisser le temps que l'agrafe (20) passe.

6. Procédé selon la revendication 5, **caractérisé en ce que** l'effort d'introduction de l'agrafe (20) dans le support (1) ne dépasse pas 2 daN.

## Patentansprüche

1. Montage- und Demontageanordnung von lösbaren Elementen auf einer tragenden Struktur, aufweisend eine Klammer (20) und einen Träger (1) für die Klammer (20), wobei die Klammer (20) einen Klammerfuß (21) und einen Befestigungsabschnitt (22) an der Struktur umfasst,
wobei der Träger (1) aufweist
eine Stützwand (2) mit
einer oberen Fläche (2A), auf welcher der Befestigungsabschnitt (22) der Klammer (20) nach Einsetzen der Klammer in den Träger ruht, und
einer unteren Fläche (2B), unter welcher die Stützwand (2) des Klammerfußes (21) durch Einsetzen der Klammer (20) in den Träger (1) einreift,
wobei die Stützwand (2) zu diesem Zweck mit einem am Einsetzende (5) der Klammer (20) geöffneten und am entgegengesetzten Ende (4) geschlossenen Knopfloch ausgestattet ist,
und eine Lasche (6),
die vor dem geöffneten Ende (5) des Knopflochs (3) angeordnet und mit dem Träger (1) anhand eines (7) ihrer zwei entgegengesetzten Enden (7, 8) fest verbunden ist,
wobei sich die Lasche (6) etwa parallel zur Stützwand (2) des Trägers (1) erstreckt und zwischen einer Position, in welcher sie verformt ist, um das Einsetzen der Klammer (20) in das Knopfloch (3) zu gestatten, und einer Ruheposition, in welcher sie es der Klammer (20) untersagt, von sich aus das Knopfloch (3) nach ihrem Einsetzen zu verlassen, elastisch verformbar ist,
**dadurch gekennzeichnet, dass** eine Ebene (P3), in welcher sich ein horizontaler Teil der oberen Fläche der Lasche (6) erstreckt, einer Ebene entspricht, in welcher sich die untere Fläche der Stützwand (2) erstreckt, und dass
die Anordnung für ein Einsetzen der Klammer (20) in das Knopfloch (3) in geneigter Position in Bezug auf die obere Fläche der Lasche (6) geeignet ist, so dass sich die Kontaktzone des Klammerfußes (21) mit der Lasche (6) am freien Ende (8) derselben (6) direkt vor der Öffnung des Knopflochs (3) befindet).

2. Anordnung nach Anspruch 1, **dadurch gekennzeichnet, dass** der Klammerfuß (21) eine kreisrunde Form hat.

3. Anordnung nach Anspruch 1 oder 2, **dadurch gekennzeichnet, dass** sie eine Positionierungszone (9) umfasst, die zur Positionierung der Klammer (20) vor ihrem Einsetzen in das Knopfloch (3) dient.

4. Anordnung nach Anspruch 3, **dadurch gekennzeichnet, dass** die Positionierungszone (9) von zwei Zentrierwänden (10, 11) eingefasst ist.

5. Verfahren zum Einsetzen einer Klammer (20), umfassend einen Klammerfuß (21) und einen Befestigungsabschnitt (22) an einer tragenden Struktur, in einen Klammerträger (1), umfassend eine Stützwand (2) mit einer oberen Fläche (2A), auf welcher der Befestigungsabschnitt (22) der Klammer (20) nach Einsetzen der Klammer in den Träger ruht, und einer unteren Fläche (2B), unter welcher die Stützwand (22) des Klammerfußes (21) durch Einsetzen der Klammer (20) in den Träger (1) einreift, wobei die Stützwand (21) zu diesem Zweck mit einem an einem ihrer zwei Einsetzenden (5) der Klammer (20) geöffneten und an entgegengesetzten Enden (4, 5) geschlossenen Knopfloch ausgestattet ist, wobei der Träger (1) ferner eine Lasche (6) umfasst, die vor dem geöffneten Ende (5) des Knopflochs (3) angeordnet und mit dem Träger (1) anhand eines (7) ihrer zwei entgegengesetzten Enden (7, 8) fest verbunden ist, wobei sich die Lasche (6) etwa parallel zur Stützwand (2) des Trägers (1) erstreckt und zwischen einer Position, in welcher sie verformt ist, um das Einsetzen der Klammer (20) in das Knopfloch (3) zu gestatten, und einer Ruheposition, in welcher sie es der Klammer (20) untersagt, von sich aus das Knopfloch (3) nach ihrem Einsetzen zu verlassen, elastisch verformbar ist,
**dadurch gekennzeichnet, dass** es die Schritte umfasst
der Präsentation der Klammer (20) vor dem geöffneten Ende (5) des Knopflochs (3) in einer in Bezug auf die obere Fläche der Lasche (5) geneigten Position, die erlaubt, den Klammerfuß (21) zwischen der Lasche (6) und dem geöffneten Ende (5) des Knopflochs (3) derart einzusetzen, dass sich die Kontaktzone des Klammerfußes (21) mit der Lasche (6) am freien Ende (8) derselben (6) befindet, und
des Einsetzens der Klammer (20) in den Klammerträger (1) mit begleitender Abstützung der Klammer (20) auf der Lasche (6), damit sie während der Durchgangszeit der Klammer (20) nachgibt.

6. Verfahren nach Anspruch 6, **dadurch gekennzeichnet, dass** die Kraft zum Einsetzen der Klammer (20) in den Träger (1) 2 daN nicht überschreitet.

## Claims

1. An arrangement for assembling and disassembling removable elements on a support structure including a clip (20) and a support (1) for said clip (20), said clip (20) comprising a clip base (21) and a fastening portion (22) to said structure, the support (1) including
a bearing wall (2) with
an upper face (2A) on which the fastening portion (22) of the clip (20) rests after the clip is inserted in the support, and
a lower face (2B), below which bearing wall (2) the clip base (21) becomes housed by insertion of the clip (20) in the support (1),
the bearing wall (2) being provided to that end with a buttonhole (3) open at the insertion end (5) of the clip (20) and closed at the opposite end (4),
and a tongue (6)
positioned in front of the open end (5) of the buttonhole (3) and secured to the support (1) by one (7) of its two opposite ends (7, 8),
the tongue (6) extending substantially parallel to the bearing wall (2) of the support (1) and being elastically deformable between a position in which it is deformed to allow the insertion of the clip (20) in the buttonhole (3) and an idle position in which it prevents the clip (20) from leaving the buttonhole (3) itself after insertion,
**characterized in that** a plane (P3) in which a horizontal part of the upper face of the tongue (6) extends corresponds to a plane in which the lower face of the bearing wall (2) extends, and **in that**
the arrangement is suitable for insertion of the clip (20) into the buttonhole (3) in an inclined position relative to the upper surface of the tongue (6) such that the contact zone of the clip base (21) with the tongue (6) is situated at the free end (8) of said tongue (6) just in front of the opening of the buttonhole (3).

2. The arrangement according to claim 1, **characterized in that** the clip base (21) has a circular shape.

3. The arrangement according to claim 1 or 2, **characterized in that** it comprises a positioning zone (9) serving to position the clip (20) before it is inserted in the buttonhole (3).

4. The arrangement according to claim 3, **characterized in that** the positioning zone (9) is bordered by two centering walls (10, 11).

5. A method for inserting a clip (20) comprising a clip base (21) and a fastening portion (22) for fastening to a support structure, in a clip support (1) including a bearing wall (2) with an upper face (2A) on which the fastening portion (22) of the clip (20) rests after insertion of the clip into the support and a lower face (2B) below which bearing wall (22) the clip base (21) is housed by inserting the clip (20) into the support (1), the bearing wall (21) being provided to that end with a buttonhole (3) open at one of its two insertion ends (5) of the clip (20) and closed at the opposite end (4, 5), the support (1) further comprising a tongue (6) positioned in front of the open end (5) of the buttonhole (3) and secured to the support (1) by one (7) of its two opposite ends (7, 8), the tongue (6) extending substantially parallel to the bearing wall (2) of the support (1) and being elastically deformable between a position in which it is deformed to allow the insertion of the clip (20) into the buttonhole (3) and an idle position in which it prevents the clip (20) from leaving the buttonhole (3) itself after its insertion,
**characterized in that** it comprises the steps of presenting the clip (20) in front of the open end (5) of the buttonhole (3) in an inclined position relative to the upper surface of the tongue (6) making it possible to insert the clip base (21) between the tongue (6) and the open end (5) of the buttonhole (3) such that the contact zone of the clip base (21) with the tongue (6) is situated at the free end (8) thereof (6), and
inserting the clip (20) in the clip support (1) with concomitant bearing of the clip (20) on the tongue (6) to cause it to collapse as the clip (20) passes.

6. The method according to claim 5, **characterized in that** the insertion force of the clip (20) into the support (1) does not exceed 2 daN.
